# EUROPÄISCHE PATENTSCHRIFT

(11) **EP 3 813 210 B1**
(45) Veröffentlichungstag und Bekanntmachung des Hinweises auf die Patenterteilung: **21.09.2022**
(21) Anmeldenummer: 19205053.2
(22) Anmeldetag: 24.10.2019
(51) Int. Cl.: H02G 1/00, H02G 3/00, H02G 5/00

(54) **INSTALLATIONSVORRICHTUNG FÜR STROMSCHIENEN SOWIE INSTALLATIONSVERFAHREN**
INSTALLATION DEVICE FOR BUSBARS AND INSTALLATION METHOD
DISPOSITIF D'INSTALLATION POUR BARRES OMNIBUS AINSI QUE PROCÉDÉ D'INSTALLATION

(43) Veröffentlichungstag der Anmeldung: 28.04.2021
(73) Patentinhaber: Zurecon AG, 9053 Teufen AR (CH)
(72) Erfinder: PFLUGER, Gerd, 4625 Oberbuchsiten (CH)
(74) Vertreter: Rutz & Partner

(56) Entgegenhaltungen:
- EP-A1- 1 589 627
- EP-A1- 1 905 723

## Beschreibung

Die Erfindung betrifft eine Installationsvorrichtung für Stromschienen und ein Installationsverfahren zur Montage von Stromschienen mit dieser Installationsvorrichtung.

Für die Übertragung von Strom mit hoher Leistung und Zuverlässigkeit werden Stromschienen als Übertragungsleitungen zwischen Transformatoren, Haupt- und Unterverteilern in Fabrikhallen, Gewerbe- und Verwaltungsgebäuden, oder auch als Steigleitungen in Hochbauten eingesetzt. Stromschienen und dafür vorgesehene Installationsvorrichtungen sind z.B. aus dem Produktkatalog "Niederspannungs-Schienenverteiler LANZ HE 2.5.2" der LANZ OENSINGEN AG vom Januar 2013 bekannt. Weitere Montagevorrichtungen sind aus dem Produktkatalog "LANZ die moderne Kabelführung" der LANZ OENSINGEN AG vom Oktober 2015 bekannt.

Die Installation von Leitungen, Einrichtungen und Geräten am und im Baukörper wird traditionellerweise von Monteuren ausgeführt, die nicht auf die Installation von Stromschienen spezialisiert sind und die fallweise die benötigten Befestigungs- und Montagemittel beschaffen. Zum Anheben von schweren Stromschienen mit einem Gewicht von über 50 kg werden Hebevorrichtungen verwendet.

Die EP1589627B1 offenbart die nachstehend in Fig. 1 gezeigte Montagevorrichtung 9 und eine Hebevorrichtung 4 mit zwei Tragvorrichtungen 41A, 41B, die der Installation von Stromschienen 1 im Bereich der Decke 8 eines Gebäudes dienen. Die Montagevorrichtung 9 umfasst ein an der Decke 8 montiertes Horizontalprofil 91 und zwei als Gewindestangen ausgebildete Vertikalprofile 92, zwischen die die Stromschienen 1 mittels der Tragvorrichtungen 41A, 41B und zugehörigen Zugseilen 44A, 44B hochgefahren werden können.

Zur Befestigung der Zugseile 44A, 44B ist oberhalb des Horizontalprofils 91 ein Montageprofil 99 eingesetzt. Die Zugseile 44A, 44B verlaufen über eine erste Umlenkrolle 95, die an einem ersten Ende des Montageprofils 99 gehalten ist, weiter über zwei Umlenkrollen 45A, 45B an den Tragvorrichtungen 41A, 41B und weiter zum zweiten Ende des Montageprofils 99.

Die Stromschienen 1 sind auf der Frontseite von der ersten Tragvorrichtung 41A und auf der Rückseite von der zweiten Tragvorrichtung 41B gehalten.

Die beiden Gewindestangen 92 sind nach dem Einführen der Stromschienen 1 mittels ersten Schraubenmuttern 921 und zweiten Schraubenmuttern 922 mit einem eingesetzten Tragprofil 93 verbindbar, auf das die gegen das Horizontalprofil 91 hochgefahrenen Stromschienen 1 heruntergefahren werden.

Diese Hebevorrichtung 4 weist verschiedene Nachteile auf. Bevor die Stromschienen 1 hochgezogen werden können, ist ein erheblicher Installationsaufwand erforderlich. Zuerst ist das Montageprofil 99 an der Decke 8 zu montieren. In der gezeigten Ausführung ist dieses oberhalb des Horizontalprofils 91 eingesetzt, wo es Raum in Anspruch nimmt. Anschliessend sind die Tragvorrichtungen 41A, 41B bereitzustellen und die Zugseile 44A, 44B zu montieren.

In der Folge müssen die schweren Stromschienen 1 angehoben und auf die Tragvorrichtungen 41A, 41B abgelegt werden. Erst jetzt können die Tragvorrichtungen 41A, 41B mit den Stromschienen 1 angehoben werden. Nun ist aber zu beachten, dass ein Anheben der Tragvorrichtungen 41A, 41B durch kräftiges Personal äusserst gefährlich ist. Bei einem Missgeschick, z.B. bei einem versehentlichen Loslassen eines Zugseils oder bei einem ungleichmässigen Hochziehen der Tragvorrichtungen 41A, 41B könnten die Stromschienen 1 von den Tragvorrichtungen 41A, 41B fallen und einerseits Personen verletzen und andererseits durch den Aufprall zerstört werden.

Zu beachten ist ferner, dass die Tragvorrichtungen 41A, 41B, die mittels der Umlenkrollen 45A, 45B von den Zugseilen 44A, 44B gehalten sind, nicht auf die eine oder andere Seite abkippen. Die Tragvorrichtungen 41A, 41B sind daher sicherheitshalber z.B. durch weitere Seile in horizontaler Ausrichtung zu halten.

Um diese Probleme zu vermeiden wurde in der EP1589627B1 auch vorgeschlagen, jede der Tragvorrichtungen 41A, 41B mit zwei Antriebsaggregaten zu versehen. Diese Lösung ist jedoch noch wesentliche aufwendiger als die Lösung ohne mitgeführte Antriebsaggregate.

Nebst dem Herstellungsaufwand, Kostenaufwand, und Bedienungsaufwand für die Hebevorrichtung 4 gemäss der EP1589627B1 ergibt sich zudem ein entsprechender Transportaufwand. Die Tragvorrichtungen 41A, 41B nehmen Raum in Anspruch und weisen ein erhebliches Gewicht auf. Hinsichtlich der Tragvorrichtungen 41A, 41B ist ferner zu beachten, dass diese nicht ganz bis zur Decke 8 angehoben werden können, weshalb mehr Raum für die Installation der Stromschienen 1 beansprucht wird.

Hinsichtlich der Installation der Stromschienen ist weiter zu beachten, dass zwei Arbeitsprozesse vorliegen. Einerseits müssen die Montagevorrichtungen an der Decke montiert werden. Andererseits müssen die Stromschienen angehoben werden und die Montagevorrichtungen bedient werden. D.h., das Tragprofil muss vor dem Hochziehen der Stromschienen entfernt und nach dem Hochziehen der Stromschienen wieder eingesetzt werden. Eine Montagegruppe ist daher für die Installation der Montagevorrichtungen vorzusehen und eine weitere Montagegruppe ist für das Anheben der Stromschienen besorgt, während zumindest eine weitere Person, auf einer Leiter stehend, die Montagevorrichtung bzw. das Tragprofil betätigt. Die Installation der Stromschienen mit der bekannten Vorrichtung ist daher arbeitsintensiv und mit Risiken verbunden. Eine weitere Installationsvorrichtung für die Befestigung von Stromschienen an einer Decke ist auch in EP1905723A1 offenbart.

Der vorliegenden Erfindung liegt daher die Aufgabe zugrunde, eine verbesserte Vorrichtung für die Installation von Stromschienen und ein verbessertes Installationsverfahren anzugeben, mittels dessen Stromschienen in einer Montagevorrichtung montierbar sind.

Die Installationsvorrichtung soll einfach ausgestaltet sein und nur einen geringen Materialaufwand und Kostenaufwand verursachen. Ferner soll die Installationsvorrichtung rasch und bequem einsetzbar sein.

Es sollen an einer Baustelle bereits vorhandene Hilfsvorrichtungen vorteilhaft einsetzbar sein, ohne dass neue Vorrichtungen geschaffen werden müssen. Das für die Installation benötigte Installationsmaterial soll kaum Raum in Anspruch nehmen und bequem zum Installationsort transportierbar sein. Durch Vermeidung voluminöser Vorrichtungsteile soll es möglich sein, die Stromschienen maximal bis zur Decke hochzuziehen.

Die Stromschienen sollen ohne Sicherheitsrisiken installierbar sein. Auch bei Fehlmanipulationen sollen die Stromschienen stets gesichert sein.

Die Stromschienen sollen zudem mit einfachen Mitteln maschinell hochgefahren werden können, sodass eine Installation ohne Kraftaufwand möglich ist.

Der Prozess des Hochfahrens der Stromschienen und der Prozess der Installation und Bedienung der Montagevorrichtungen, die zum Halten der Stromschienen an einer Decke vorgesehen sind, sollen miteinander kombinierbar sein, sodass sich der gesamte Installationsprozess vereinfacht und weniger Personal benötigt wird.

Diese Aufgabe wird mit einer Installationsvorrichtung und einem Installationsverfahren gelöst, welche die in Anspruch 1 bzw. 12 angegebenen Merkmale aufweisen. Vorteilhafte Ausgestaltungen der Erfindung sind in weiteren Ansprüchen angegeben.

Die für die Montage wenigstens einer Stromschiene vorgesehene Installationsvorrichtung umfasst Montagevorrichtungen, die an einer Gebäudedecke montiert sind, zwei Hebevorrichtungen, die je ein Zugmittel und je eine mit der zugehörigen Montagevorrichtung verbundene Umlenkrolle aufweisen.

Erfindungsgemäss ist wenigstens eine Arbeitsbühne mit einer Arbeitsplattform und gegebenenfalls einem Geländer vorgesehen, an der im Bereich der Arbeitsplattform für jede der Hebevorrichtungen durch Verbindungsmittel eine Zugvorrichtung befestigt ist, mittels der das zugehörige Zugmittel, das über die zugehörige Umlenkrolle geführt ist und das mit einem Endstück mit der wenigstens einen Stromschiene verbindbar ist, anziehbar ist, um die wenigstens eine Stromschiene in die Montagevorrichtungen hochzuziehen, in denen sie fixierbar ist.

Mit der erfindungsgemässen Installationsvorrichtung können schwere Stromschienen rasch und sicher installiert werden. Mittels der Hebebühne können die Montagevorrichtungen an der Gebäudedecke montiert, anschliessend die Stromschienen hochgefahren werden und weiter die notwendigen Manipulationen an den Montagevorrichtungen vorgenommen werden.

Durch Verbindung der Zugvorrichtungen mit der Arbeitsbühne werden die Zugvorrichtungen gesichert und fixiert. Vorzugsweise werden lösbare Verbindungsmittel, wie Karabinerhaken, vorgesehen, die mit der Struktur, gegebenenfalls dem Geländer der Arbeitsbühne verbunden werden. Die Zugvorrichtungen können daher bedarfsweise für die Installation der Stromschienen eingesetzt und anschliessend wieder entfernt werden.

Die Arbeitsbühne, die ein relativ grosses Eigengewicht aufweist, bildet das Gegengewicht zu den hochgezogenen Stromschienen. Sofern erforderlich, wird das Gewicht der Arbeitsbühne durch Ballast erhöht. Erfindungsgemäss wird die Arbeitsbühne somit funktional mit den Zugvorrichtungen kombiniert, sodass das wesentliche Problem der Fixierung und Sicherung der Zugvorrichtungen gelöst ist. Die Arbeitsbühne weist vorzugsweise Rollen oder Räder auf, sodass sie leicht an einen Installationsstandort gefahren oder bedarfsweise verschoben werden kann.

Besonders vorteilhaft ist ferner, dass mit der erfindungsgemässen Installationsvorrichtung bzw. mit dem erfindungsgemässen Installationsverfahren nur wenig Personal benötigt wird. Grundsätzlich könnte die Installation der Stromschienen von einer einzigen Person ausgeführt werden. Dies insbesondere dann, wenn eine Steuervorrichtung vorhanden ist, welche es erlaubt, die Zugvorrichtungen bzw. deren Antriebsvorrichtungen synchron anzusteuern.

Die Antriebsvorrichtungen sind drahtgebunden oder drahtlos je mit einer Steuereinheit verbunden oder verbindbar oder drahtgebunden oder drahtlos mit einer gemeinsamen Steuereinheit verbunden, mittels der die Antriebsvorrichtungen synchron und soweit erforderlich auch asynchron betreibbar sind.

Die Zugvorrichtungen können eine manuell betätigbare Antriebsvorrichtung oder eine Antriebsvorrichtung mit einem Elektromotor umfassen. Die Antriebsvorrichtung kann in die Zugvorrichtung integriert oder mit dieser Bauweise koppelbar sein. Beispielsweise ist es möglich, eine Bohrmaschine oder eine Antriebsvorrichtung für einen Schraubendreher mit der Zugvorrichtung zu koppeln.

Die Zugvorrichtung oder Seilwinde weist eine Sicherungsvorrichtung auf, die verhindert, dass das Zugmittel bzw. Zugseil unter der Last der Stromschiene zurückrutschen kann. Das Zugmittel wird beispielsweise mehrfach um eine Rolle gewickelt und in dieser festgeklemmt. Auf diese Weise wird das Zugmittel mit ansteigender Last nur noch stärker fest geklemmt und kann nicht mehr zurückweichen. Das Zugmittel wird nach Durchlaufen der Zugvorrichtung vorzugsweise freigegeben und nicht auf einer Rolle aufgewickelt. Durch Verzicht auf eine Wickelrolle können das Gewicht und die Dimensionen der Zugvorrichtung auf ein Minimum reduziert werden.

Die mit der Arbeitsbühne verbindbaren Zugvorrichtungen können somit einfach ausgestaltet sein und selbst nur ein sehr geringes Gewicht aufweisen. Da Arbeitsbühnen in der Bauphase eines Projekts für verschiedene Arbeiten bereits vorhanden sind, muss das für die Installation der Stromschienen verantwortliche Personal nur sehr wenig und sehr leichtes Installationsmaterial zum Installationsort bringen. Eine voluminöse und relativ schwere Tragvorrichtung, wie sie aus dem Stand der Technik bekannt ist, wird vermieden. Das vom Installationspersonal mitzuführende Installationsmaterial passt in einen Koffer, der bequem zum Installationsort getragen werden kann.

Durch die zuverlässige Sicherung der Installationsvorrichtung werden Risiken für das Personal vollständig ausgeschlossen. Beim Einsatz von Elektromotoren können die Stromschienen ferner ohne Kraftaufwand bequem installiert werden.

Die den Stromschienen zugewandten Endstücke der Zugmittel sind vorzugsweise durch einen Haken mit einer vorzugsweise bandförmigen Schlaufe verbindbar, die dem Halten der Stromschiene dient. In bevorzugten Ausgestaltungen sind die Stromschienen mit Montageelementen versehen, die mit dem Zugmittel koppelbar sind.

In vorzugsweisen Ausgestaltungen weisen die Montagevorrichtungen ein an der Gebäudedecke montierbares bzw. montiertes Horizontalprofil auf, das mit zwei voneinander beanstandeten Vertikalprofilen verbunden ist, an denen ein Tragprofil montiert ist, das die Stromschiene trägt und das zum Hochziehen der Stromschiene entfernbar und nach dem Hochziehen der Stromschiene wieder einsetzbar ist.

Die Montagevorrichtungen weisen vorzugsweise Justiervorrichtungen auf, mittels denen Höhe, Lage und Ausrichtung der installierten Stromschienen justierbar sind, sodass benachbarte Stromschienen axial zueinander ausgerichtet und präzise miteinander verbunden werden können.

Die für die Zugvorrichtungen bzw. die Zugmittel erforderlichen Umlenkrollen werden je mit dem zugehörigen Horizontalprofil lösbar verbunden oder sind je in das zugehörige Horizontalprofil integriert. Die Integration einer Umlenkrolle in ein Horizontalprofil, die mit geringem Kostenaufwand realisiert werden kann, führt zu einer weiteren Vereinfachung des Installationsverfahrens. Die Integration der Umlenkrolle in die Horizontalprofile hat ferner den Vorteil, dass die Stromschienen bis zu den Horizontalprofilen hochgezogen werden können.

Das Installationsverfahren umfasst daher die folgenden Verfahrensschritte, von denen einige untereinander austauschbar sind. Insbesondere sind die Schritte zwei bis fünf beliebig untereinander austauschbar.
- Eine Arbeitsbühne, die eine Arbeitsplattform und gegebenenfalls ein Geländer umfasst, wird bereitgestellt.
- Durch vorzugsweise lösbare Verbindungsmittel werden zwei Zugvorrichtungen, die je mit einem Zugmittel versehen sind oder versehen werden, im Bereich der Arbeitsplattform mit der Arbeitsbühne verbunden.
- Wenigstens zwei Montagevorrichtungen, die der Installation der Stromschiene dienen und die dazu je ein Tragprofil aufweisen, werden an der Gebäudedecke montiert.
- Die Montagevorrichtungen werden an der Position, an der die Stromschiene hochzuziehen ist, je mit einer Umlenkrolle versehen.
- Die Zugmittel werden in die Umlenkrollen eingelegt und mit der zu installierenden Stromschiene verbunden.
- Die Zugvorrichtungen werden betätigt, um die Stromschiene hochzuziehen.
- Abschliessend wird die Stromschiene in den Montagevorrichtungen fixiert und gegebenenfalls in der Höhe, Lage und Ausrichtung justiert.

Nachfolgend wird die Erfindung anhand von Zeichnungen näher erläutert. Dabei zeigt:
- Fig. 1: die aus der EP1589627B1 bekannte Montagevorrichtung 9, die eingangs beschrieben wurde;
- Fig. 2a: eine Explosionsdarstellung einer erfindungsgemässen Montagevorrichtung 9, die ein Horizontalprofil 91 und zwei damit verbundene Vertikalprofile 92 sowie ein Tragprofil 93 und zwei Justiervorrichtungen 94 aufweist;
- Fig. 2b: eine Verbindungsvorrichtung 7 mit einem ersten und einem zweiten Ankerelement 72, 73, die in Öffnungen 99 im Horizontalprofil 91 und den Vertikalprofilen 92 verankerbar und durch eine Verbindungsschraube 71 miteinander verbindbar sind, um das Horizontalprofil 91 und die Vertikalprofile 92 der Montagevorrichtung 9 von Fig. 2 gegenseitig zu fixieren;
- Fig. 3: die Montagevorrichtung 9 von Fig. 2a, mit dem linken Vertikalprofil 92 in Schnittdarstellung gezeigt, und zwei angehobene Stromschienen 1 während der Justierung des Tragelements 93;
- Fig. 4: die Montagevorrichtung 9 von Fig. 3 nach dem Einsetzen des Tragelements 93 und dem Absenken der beiden Stromschienen 1;
- Fig. 5a: eine erfindungsgemässe Installationsvorrichtung 5 mit zwei an der Gebäudedecke befestigten Montagevorrichtungen 9A, 9B und zwei Hebevorrichtungen 5A, 5B, die je eine auf einer Arbeitsbühne 51 befestigte Zugvorrichtung 52A; 52B mit einem Zugmittel 53A, 53B umfassen, das über eine Umlenkrolle 54A; 54B an der zugehörigen Montagevorrichtung 9A, 9B zu einer Stromschiene 1 geführt ist;
- Fig. 5b: das Ende eines Zugmittels 53, welches durch Ösen 5311 und Haken 5312 mit einer Montageschlaufe 531' verbunden ist; und
- Fig. 5c: die Installationsvorrichtung 5 von Fig. 5a in vergrösserter Darstellung.

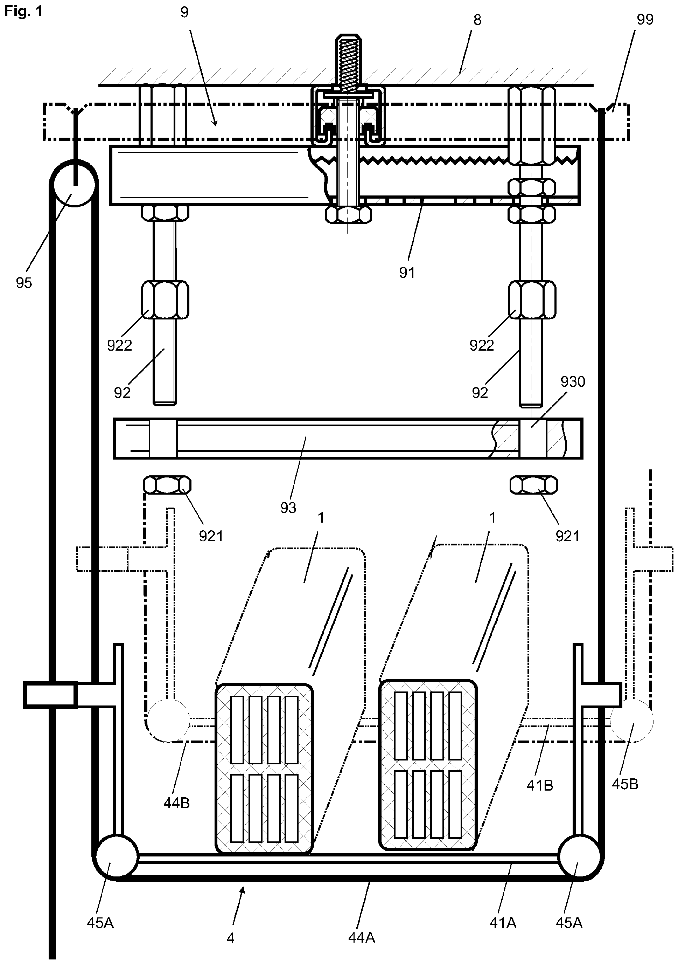

Fig. 1 zeigt die eingangs beschriebene Installationsvorrichtung, die aus der EP1589627B1 bekannt ist.

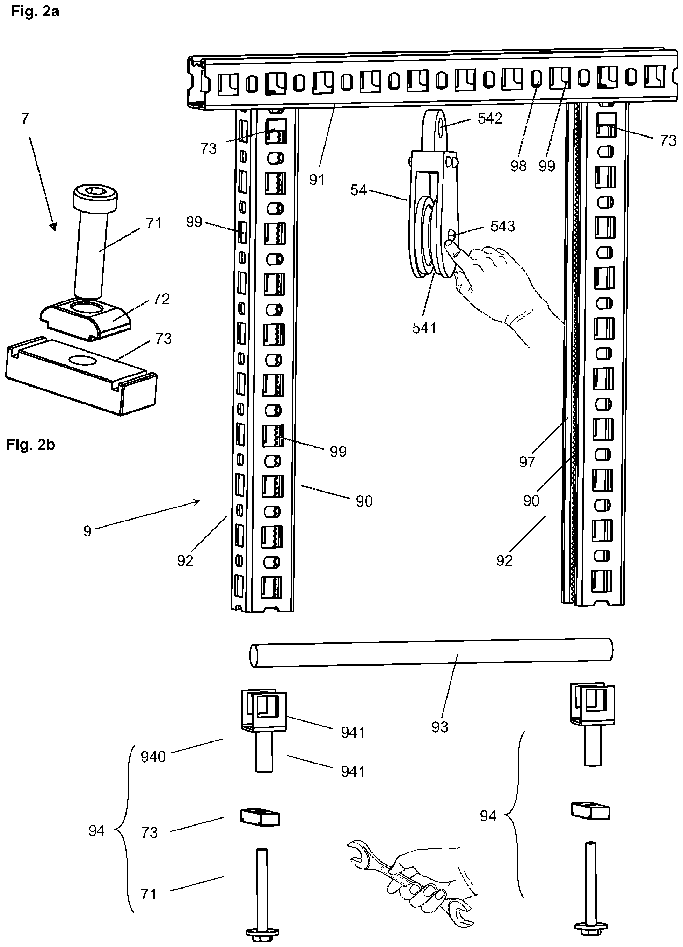

Fig. 2a zeigt eine Explosionsdarstellung einer erfindungsgemässen Montagevorrichtung 9, die ein Horizontalprofil 91 und zwei damit verbundene Vertikalprofile 92 sowie zwei Justiervorrichtungen 94 und ein Tragprofil 93 aufweist.

Das Horizontalprofil 91 und die Vertikalprofile 92 sind von einem einheitlichen Metallprofil geschnitten. Das Metallprofil umfasst drei Seitenplatten mit runden und rechteckigen Öffnungen 98, 99, die alternierend in einem Raster angeordnet sind. An den Enden der parallel zueinander ausgerichteten Seitenplatten sind gegeneinander gedrehte Abschlussleisten 97 vorgesehen, die eine Verzahnung aufweisen. Durch die Seitenplatten und die Abschlussleisten 97 wird ein C-Profil gebildet, das einen einseitig geöffneten Aufnahmekanal 90 umschliesst, der einen zumindest annähernd rechteckförmigen Querschnitt aufweist. Die beiden senkrecht zum Horizontalprofil 91 angeordneten Vertikalprofile 92 sind derart ausgerichtet, dass deren Aufnahmekanäle 90 einander zugewandt sind, so dass das Tragprofil 93 mit seinen Enden beidseits in diese einführbar und mit der Justiervorrichtung 94 koppelbar ist.

Zur Verbindung der Vertikalprofile 92 mit dem Horizontalprofil 91 ist die in Fig. 2b gezeigte Verbindungsvorrichtung 7 vorgesehen, die ein erstes und ein zweites Ankerelement 72, 73 mit Gewindebohrungen aufweist, die durch eine Verbindungsschraube 71 miteinander verbindbar sind. Möglich ist auch die Verwendung von zwei gleichen Ankerelementen 73. Die Ankerelemente 72 oder 73 werden in Öffnungen 99 des Horizontalprofils 91 und eines Vertikalprofils 92 eingesetzt und durch die Verbindungsschraube 71 gegeneinander gezogen. Das Horizontalprofil 91 und die Vertikalprofile 92 können daher in einfacher Weise stabil miteinander verbunden werden.

In den Vertikalprofilen 92 bzw. den darin vorgesehenen Aufnahmekanälen 90 sind vorzugsweise Justiervorrichtungen 94 angeordnet, die je ein mit dem zugehörigen Vertikalprofile 92 verbundenes Ankerelement 73, eine in einer Gewindebohrung im Ankerelement 73 drehbar gehaltene Justierschraube 71 und ein Lagerelement 940 umfassen, das von der Justierschraube 71 innerhalb des Aufnahmekanals 90 verschiebbar gehalten werden kann.

Das Lagerelement 941 umfasst eine Aufnahmehülse 941, die der Aufnahme des Schafts der Justierschraube 71 dient und die mit einem U-Profil-Element 942 verbunden ist, welches nach oben geöffnet ist und der Aufnahme des Tragelements 93 dient. Das koaxial zur Justierschraube 71 ausgerichtete Lagerelement 940 ist gabelförmig ausgebildet und kann ein Endstück des Tragelements 93 aufnehmen. Durch Drehen der Justierschraube 71 kann das gehaltene Endstück des Tragelements 93 in der Höhe verstellt werden. Durch Drehen der Justierschrauben 71 bei beiden Vertikalprofilen 92 kann das Tragprofil 93 in der Höhe und der Neigung verstellt werden.

Etwa in der Mitte wird das Horizontalprofil 91 mit einer Umlenkrolle 54 verbunden, die ein Laufrad 541 und ein Montageteil 542 aufweist. Die Umlenkrolle 54 ist vergrössert dargestellt. Die Umlenkrolle 54 bzw. das Laufrad 541 kann vorteilhaft auch in das Horizontalprofil 91 integriert werden. Beispielsweise wird das Laufrad 541 in den Aufnahmekanal 90 des Horizontalprofils 91 eingesetzt und durch die Radachse 543, die durch benachbarte Öffnungen 98 hindurch geführt wird, fixiert. Dadurch resultiert bei der Herstellung des Horizontalprofils 91 ein geringer Mehraufwand, der durch die entsprechende Erleichterung bei den Installationsarbeiten mehr als kompensiert wird.

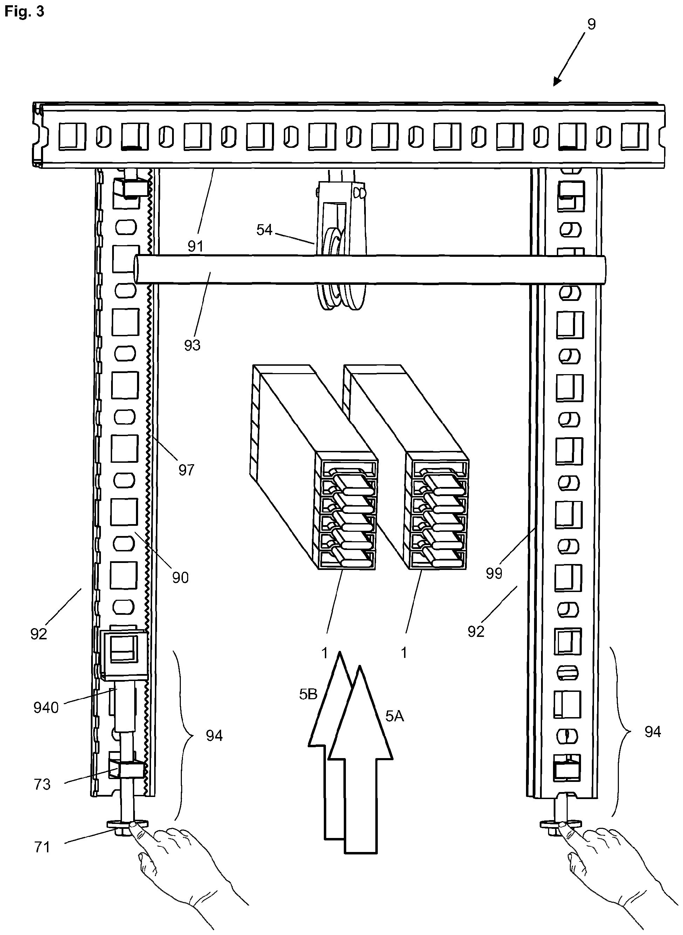

Fig. 3 zeigt die an einer Gebäudedecke montierte Montagevorrichtung 9 von Fig. 2a während der Justierung des Tragelements 93. Das linke Vertikalprofil 92 ist in Schnittdarstellung gezeigt, sodass die im Aufnahmekanal 90 montierte Justiervorrichtung 94 sichtbar ist. Es ist gezeigt, dass der Schaft der Justierschraube 71 achsparallel zum zugehörigen Vertikalprofil 92 ausgerichtet ist und diesen nach unten überragt, sodass der Schraubenkopf erfasst und gedreht werden kann.

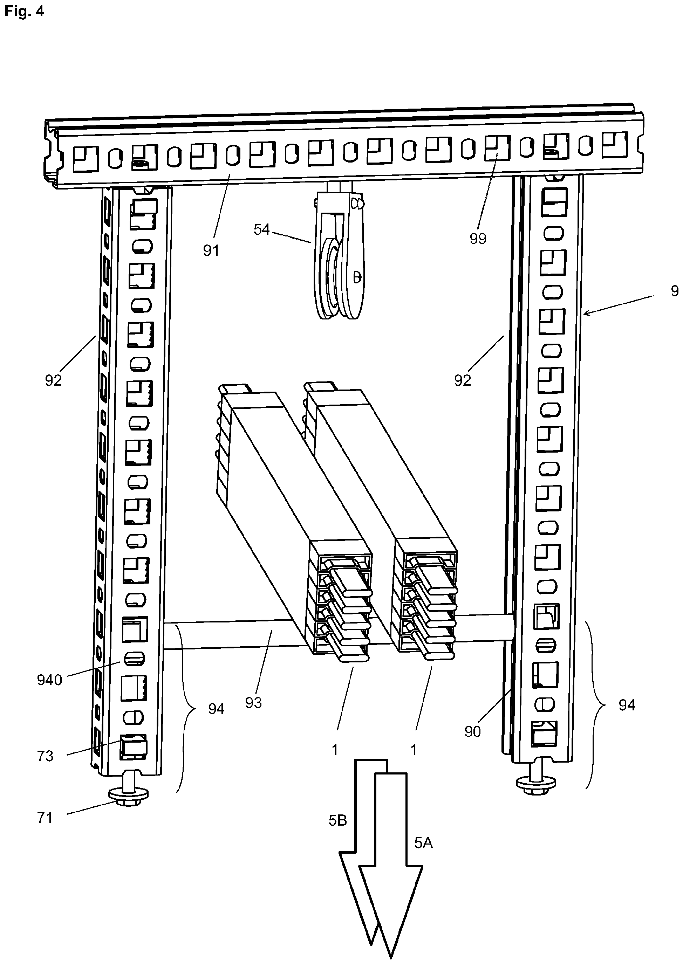

Fig. 4 zeigt die Montagevorrichtung 9 von Fig. 3 nach dem Einsetzen des Tragelements 93 und dem Absenken der beiden Stromschienen 1.

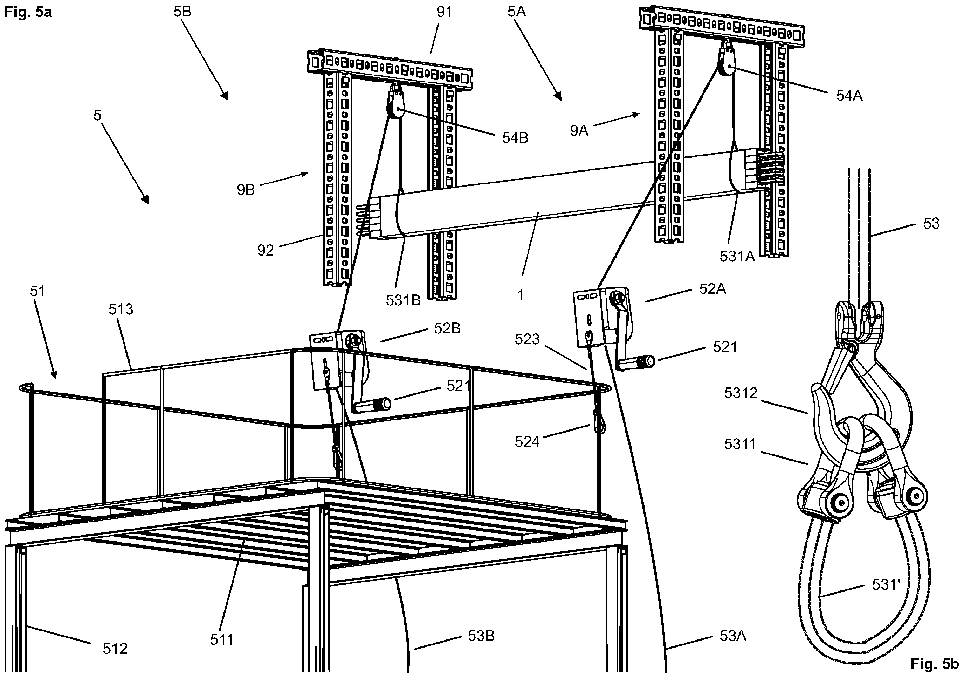

Fig. 5a zeigt eine erfindungsgemässe Installationsvorrichtung 5 mit zwei an der Gebäudedecke montierten Montagevorrichtungen 9A, 9B und einer Arbeitsbühne 51, die ein Gestell 512, eine Arbeitsplattform 511 und ein Geländer 513 umfasst. Auf der Arbeitsplattform 511 kann sich Personal bewegen, um die Montagevorrichtungen 9A, 9B zu montieren und anschliessend eine oder mehrere Stromschienen hochzuziehen. Die Arbeitsbühne 51 ist vorzugsweise in der Höhe verstellbar und vorzugsweise auf Rädern oder Rollen verfahrbar. Zum Hochziehen der Stromschiene 1 sind zwei erfindungsgemässe Hebevorrichtungen 5A, 5B vorgesehen, die je eine Zugvorrichtung bzw. Seilzugvorrichtung 52A; 52B mit einem Zugmittel bzw. Zugseil 53A; 53B umfassen.

Die Zugvorrichtungen 52A; 52B sind an der Arbeitsbühne 51 ist im Bereich der Arbeitsplattform 511 bzw. am Geländer 513 durch Verbindungsmittel 523, 524 lösbar befestigt. Das Zugmittel 53A; 53B wird nicht aufgerollt, sondern festgehalten und beim Betrieb der Zugvorrichtungen 52A, 52B nach unten weggeführt. Die Zugvorrichtungen 52A, 52B umfassen eine Antriebseinheit 521, typischerweise einen Elektromotor oder, wie symbolisch gezeigt, eine Kurbel, die manuell bedienbar ist. Geeignete Zugvorrichtungen, die im Bereich der Bergrettung eingesetzt werden, sind z.B. aus der EP0624387A1 oder der EP3212297B1 bekannt.

Die Zugmittel 53A; 53B sind je über eine Umlenkrolle 54A, 54B, die an der zugehörigen Montagevorrichtung 9A, 9B montiert oder darin integriert ist, zu einer Stromschiene 1 geführt. Die Enden 531A, 531B der Zugmittel 53A, 53B sind als Schlaufen ausgebildet, welche die Stromschiene 1 umschliessen.

Durch synchronen Betrieb der Zugvorrichtungen 52A, 52B kann die Stromschiene 1 horizontal ausgerichtet nach oben gefahren werden. Durch eine Blockiereinheit wird verhindert, dass die Antriebswellen der Antriebseinheiten 521 zurückdrehen können. Die Antriebswellen sind vorzugsweise mit einem Zahnrad gekoppelt, an dem ein drehbar gelagerter Blockierhebel anliegt, der beim Anziehen des Zug mittels durch jeden Zahn des Zahnrades angehoben wird und dann zurück zwischen zwei Zähne fällt. Sobald die Antriebswelle zurückdreht, verrastet der Blockierhebel zwischen zwei Zähnen des Zahnrads und verhindert dadurch eine weitere Drehung der Antriebswelle. Sollte ein Elektromotor ausfallen oder die manuelle Bedienung der Antriebskurbel unterbrochen werden, so wird die Antriebswelle sofort blockiert.

Wie dies gezeigt ist, wird die Stromschiene 1 nach Betätigung der Zugvorrichtungen 52A; 52B bis zu den Umlenkrollen 54A, 54B nach oben gezogen werden. Wie Fig. 4 zeigt, wird anschliessend das Tragprofil 93 in die Vertikalprofile 92 eingesetzt. Sofern die Umlenkrollen 54A, 54B in die Horizontalprofile 91 integriert werden, kann die Stromschiene 1 bis ganz nach oben bis zum Anschlag an den Horizontalprofilen 91 gezogen werden.

Fig. 5b zeigt das Ende eines Zugmittels 53, welches durch Ösen 5311 und Haken 5312 mit einer Montageschlaufe 531' verbunden ist. Die Montageschlaufe 531' kann um die Stromschiene 1 gelegt werden, wonach der Haken 5312 in die Ösen 5311 eingeführt wird. Eine oder mehrere Stromschiene 1 können daher rasch und sicher mit den Zugmitteln 53 verbunden werden. Die Stromschiene 1 weist an den betreffenden Montagestellen vorzugsweise eine Markierung oder Einformung auf, die der Aufnahme des Zug mittels 53 oder der Montageschlaufe 531' dient.

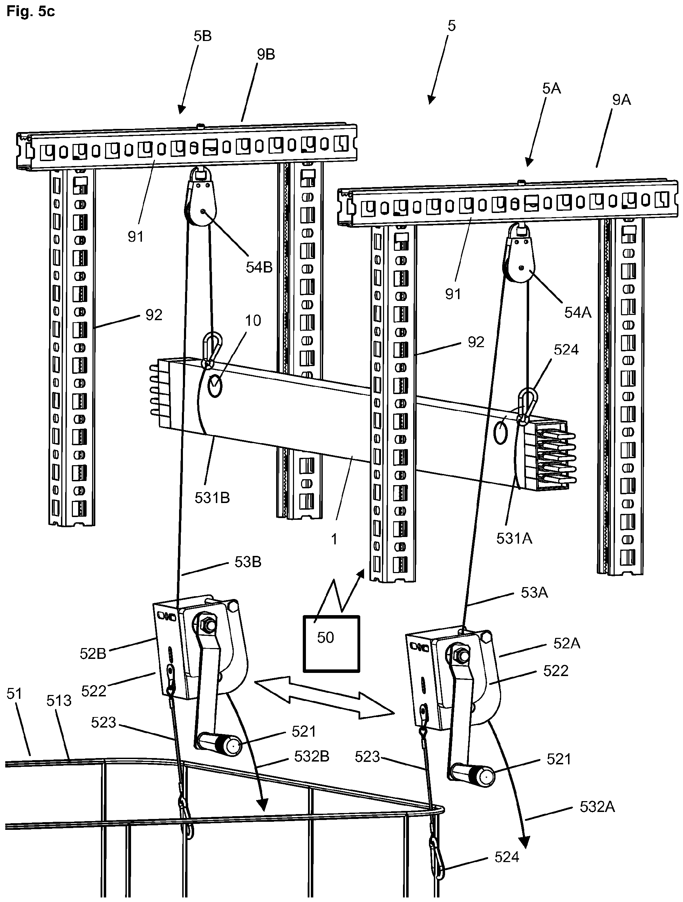

Fig. 5c zeigt die Installationsvorrichtung 5 in vergrösserter Darstellung. Es ist gezeigt, dass die Zugvorrichtungen 52A, 52B durch Verbindungsteile oder Verbindungsstäbe 523 und Karabinerhaken 524 lösbar mit dem Geländer 513 der Arbeitsbühne 51 verbunden sind. Die Antriebsvorrichtungen 521, die symbolisch mit einer Kurbel dargestellt sind, umfassen Elektromotoren, die mittels einer Steuereinheit 50 synchron oder asynchron angesteuert werden. Beide Zugvorrichtungen 52A, 52B können daher von einer Person gesteuert, vorzugsweise ferngesteuert werden.

Es ist gezeigt, dass beim Hochziehen der Stromschiene 1 die Enden 532A, 532B der Zugmittel 53A, 53B nach unten weggeführt werden.

Die anderen Enden 531 sind mit einem Karabinerhaken 524 versehen, mittels dessen die um die Stromschiene 1 herumgeführt Schlaufe 531B bzw. 531B abgeschlossen ist. Das Zugmittel 53A bzw. 53B wird daher um die Stromschiene 1 herumgeführt, wonach der Karabinerhaken 524 in das Zugmittel 53A bzw. 53B eingehängt wird. Die Verbindung mit der Stromschiene 1 kann daher mit wenigen Handgriffen vollzogen werden.

Strichpunktiert ist ferner gezeigt, dass die Enden 531A, 531B der Zugmittel 53A, 53B oder gegebenenfalls Schlaufen gemäss Fig. 5b, durch Montageelemente 10 im Körper der Stromschiene 1, wie Montageringe, Montageöffnungen, Montagehaken oder dergleichen, hindurch geführt oder darin eingehängt werden können.

Die Leitungsstäbe qualitativ hochwertiger Stromschienen sind z.B. in Giessharz oder Epoxyzement bzw. Polymerbeton eingegossen und erreichen dadurch den Schutzgrad IP68. In die Gussmasse können daher entsprechende Formelemente eingeformt werden. Bei Stromschienen mit einem Metallgehäuse, kann dieses mit entsprechenden Montageelementen versehen werden.

## Patentansprüche

1. Installationsvorrichtung (5) für die Montage wenigstens einer Stromschiene (1) mit Montagevorrichtungen (9A, 9B), die an einer Gebäudedecke (8) montierbar sind, mit zwei Hebevorrichtungen (5A, 5B), die je ein Zugmittel (53A, 53B) und je eine mit der zugehörigen Montagevorrichtung (9A; 9B) verbundene Umlenkrolle (54A; 54B) aufweisen, **dadurch gekennzeichnet, dass** wenigstens eine Arbeitsbühne (51) mit einer Arbeitsplattform (511) und gegebenenfalls einem Geländer (513) vorgesehen ist, an der im Bereich der Arbeitsplattform (511) für jede der Hebevorrichtungen (5A, 5B) durch Verbindungsmittel (523, 524) eine Zugvorrichtung (52A; 52B) befestigt ist, mittels der das zugehörige Zugmittel (53A; 53B), das über die zugehörige Umlenkrolle (54A; 54B) geführt ist und das mit einem Endstück (531A; 531B) mit der wenigstens einen Stromschiene (1) verbindbar ist, anziehbar ist, um die wenigstens eine Stromschiene (1) in die Montagevorrichtungen (9A, 9B) hochzuziehen, in denen sie fixierbar ist.

2. Installationsvorrichtung (5) nach Anspruch 1, **dadurch gekennzeichnet, dass** die Zugvorrichtungen (52A; 52B) je eine Antriebsvorrichtung (521) für den motorischen oder manuellen Antrieb umfassen.

3. Installationsvorrichtung (5) nach Anspruch 2, **dadurch gekennzeichnet, dass** die Antriebsvorrichtungen (521) drahtgebunden oder drahtlos je mit einer Steuereinheit (50) verbunden oder verbindbar sind oder dass die Antriebsvorrichtungen (521) drahtgebunden oder drahtlos mit einer gemeinsamen Steuereinheit (50) verbunden sind, mittels derer die Antriebsvorrichtungen (521) synchron betreibbar sind.

4. Installationsvorrichtung (5) nach Anspruch 1, 2 oder 3, **dadurch gekennzeichnet, dass** die Zugvorrichtungen (52A; 52B) das Zugmittel (53A; 53B) mit einer Rolle halten oder dass das von den Zugvorrichtungen (52A; 52B) gehaltene Zugmittel (53A; 53B), gegebenenfalls eine Zugrolle einfach oder mehrfach umschliessend, die Zugvorrichtungen (52A; 52B) durchläuft.

5. Installationsvorrichtung (5) nach einem der Ansprüche 1 - 4, **dadurch gekennzeichnet, dass** die Zugvorrichtungen (52A; 52B) durch lösbare Verbindungsmittel, wie Karabinerhaken (524) mit der Struktur, gegebenenfalls einem Geländer (513), der Arbeitsbühne (51) verbunden sind.

6. Installationsvorrichtung (5) nach einem der Ansprüche 1 - 5, **dadurch gekennzeichnet, dass** die Zugmittel (53A; 53B) Seile und die Zugvorrichtungen (52A; 52B) Seilwinden sind.

7. Installationsvorrichtung (5) nach einem der Ansprüche 1 - 6, **dadurch gekennzeichnet, dass** die Arbeitsbühne auf Rädern verfahrbar ist.

8. Installationsvorrichtung (5) nach einem der Ansprüche 1 - 7, **dadurch gekennzeichnet, dass** die den Stromschienen (1) zugewandten Endstücke (531A, 531B) der Zugmittel (53A; 53B) durch einen Haken (5312) mit einer vorzugsweise bandförmigen Schlaufe (531') verbindbar sind, die dem Halten der Stromschiene (1) dient oder dass die den Stromschienen (1) zugewandten Endstücke (531A, 531B) der Zugmittel (53A; 53B) mit Montageelementen (10) der Stromschiene (1) verbindbar sind.

9. Installationsvorrichtung (5) nach einem der Ansprüche 1 - 8, **dadurch gekennzeichnet, dass** die Montagevorrichtungen (9A; 9b) ein an der Gebäudedecke (8) montierbares Horizontalprofil (91) aufweisen, das mit zwei voneinander beanstandeten Vertikalprofilen (92) verbunden ist, an denen ein Tragprofil (93) montiert ist, das die Stromschiene (1) trägt und das zum Hochziehen der Stromschiene (1) entfernbar und nach dem Hochziehen der Stromschiene (1) wieder einsetzbar ist.

10. Installationsvorrichtung (5) nach einem der Ansprüche 1 - 9, **dadurch gekennzeichnet, dass** die Montagevorrichtungen (9A; 9b) Justiervorrichtungen (94) aufweisen, mittels denen Höhe, Lage und Ausrichtung der installierten Stromschienen (1) justierbar sind.

11. Installationsvorrichtung (5) nach einem der Ansprüche 1 - 10, **dadurch gekennzeichnet, dass** die Umlenkrollen (54A, 54B) je mit dem zugehörigen Horizontalprofil (91) lösbar verbunden sind oder dass die Umlenkrollen (54A, 54B) je in das zugehörige Horizontalprofil (91) integriert sind.

12. Verfahren zur Installation einer Stromschiene (1) mit einer Installationsvorrichtung (5) nach einem der Ansprüche 1 - 11, **dadurch gekennzeichnet,**
- **dass** eine Arbeitsbühne (51) mit einer Arbeitsplattform (511) und gegebenenfalls einem Geländer (513) bereitgestellt wird;
- **dass** durch vorzugsweise lösbare Verbindungsmittel (523, 524) zwei Zugvorrichtungen (52A, 52B), die je mit einem Zugmittel (53A; 53B) versehen sind oder versehen werden, im Bereich der Arbeitsplattform (511) mit der Arbeitsbühne (51) verbunden werden;
- **dass** wenigstens zwei Montagevorrichtungen (9A, 9b), die der Installation der Stromschiene (1) dienen und die dazu je ein Tragprofil (93) aufweisen, an der Gebäudedecke (8) montiert werden;
- **dass** die Montagevorrichtungen (9A, 9b) an der Position, an der die Stromschiene (1) hochzuziehen ist, je mit einer Umlenkrolle (54A; 54B) versehen werden;
- **dass** die Zugmittel (53A; 53B) in die Umlenkrollen (54A; 54B) eingelegt und mit der zu installierenden Stromschiene (1) verbunden werden;
- **dass** die Zugvorrichtungen (52A, 52B) betätigt werden, um die Stromschiene (1) hochzuziehen; und
- **dass** die Stromschiene (1) in den Montagevorrichtungen (9A, 9b) fixiert wird.

13. Installationsverfahren (5) nach Anspruch 12, **dadurch gekennzeichnet, dass** die Montagevorrichtungen (9A, 9b), je ein Horizontalprofil (91), zwei damit verbundene Vertikalprofile (92) sowie ein mit den Vertikalprofilen (92) verbindbares Tragprofil (93) umfassen und dass die Horizontalprofile (91) an der Gebäudedecke (8) montiert und vorzugsweise in der Mitte mit der Umlenkrolle (54A, 54B) versehen werden oder dass die bereits mit den Umlenkrollen (54 A, 54 B) versehen Horizontalprofile (91) an der Gebäudedecke (8) montiert werden.

14. Installationsverfahren (5) nach Anspruch 12 oder 13, **dadurch gekennzeichnet, dass** die Zugvorrichtungen (52A, 52B) je mit einer elektrisch betriebenen Antriebsvorrichtung (521) versehen sind, die je von einer individuell vorgesehenen Steuereinheit (50) oder gemeinsam genutzten Steuereinheit (50) gesteuert werden, um die Stromschiene (1) hochzuziehen.

15. Installationsverfahren (5) nach Anspruch 12, 13 oder 14, **dadurch gekennzeichnet, dass** die Tragprofile (93) vor dem Hochziehen der Stromschiene (1) entfernt und nach dem Hochziehen der Stromschiene (1) in die Montagevorrichtungen (9A, 9B) eingesetzt wird und dass die Montagevorrichtungen (9A; 9b) Justiervorrichtungen (94) aufweisen, mittels denen Höhe, Lage und Ausrichtung der auf den Tragprofile ruhenden Stromschiene (1) bedarfsweise justiert werden.

## Claims

1. Installation device (5) for mounting at least one busbar (1) with mounting devices (9A, 9B) that are mountable on a ceiling of a building (8), with two lifting devices (5A, 5B), each having a traction means (53A, 53B) and a deflection pulley (54A; 54B) connected to the associated mounting device (9A; 9B), **characterised in that** at least one work stage (51) with a working platform (511) and possibly a railing (513) is provided, to which in the region of the working platform (511) for each of the lifting devices (5A, 5B) a traction device (52A; 52B) is fastened by connecting means (523, 524), by which the associated traction means (53A; 53B), which is guided over the associated deflection pulley (54A; 54B) and which is connectable by means of an end piece (531A; 531B) to the at least one busbar (1), can be pulled in order to pull the at least one busbar (1) up into the mounting devices (9A, 9B) in which it can be fixed.

2. Installation device (5) according to claim 1, **characterised in that** the traction devices (52A; 52B) each comprise a drive unit (521) for motorised or manual drive.

3. Installation device (5) according to claim 2, **characterised in that** the drive units (521) are each connected or connectable by wire or wirelessly to a control unit (50) or **in that** the drive units (521) are connected by wire or wirelessly to a common control unit (50) by means of which the drive units (521) can be operated synchronously.

4. Installation device (5) according to claim 1, 2 or 3, **characterised in that** the traction devices (52A; 52B) hold the traction means (53A; 53B) with a roller or **in that** the traction means (53A; 53B) held by the traction devices (52A; 52B) passes through the traction devices (52A; 52B), possibly enclosing a traction roller once or several times.

5. Installation device (5) according to one of the claims 1 - 4, **characterised in that** the traction devices (52A; 52B) are connected to the structure, possibly a railing (513), of the work stage (51) by detachable connecting means, such as snap hooks (524).

6. Installation device (5) according to one of the claims 1 - 5, **characterised in that** the traction means (53A; 53B) are ropes and die traction devices (52A; 52B) are winches.

7. Installation device (5) according to one of the claims 1 - 6, **characterised in that** the work stage can be moved on wheels.

8. Installation device (5) according to one of the claims 1 - 7, **characterised in that** the end pieces (531A, 531B) of the traction means (53A; 53B) facing the busbars (1) can be connected by a hook (5312) to a preferably band-shaped loop (531') which serves to hold the busbar (1), or **in that** the end pieces (531A, 531B) of the traction means (53A; 53B) facing the busbars (1) can be connected to mounting elements (10) of the busbar (1).

9. Installation device (5) according to one of the claims 1 - 8, **characterised in that** the mounting devices (9A; 9b) comprise a horizontal profile (91) which can be mounted on the ceiling of the building (8) and which is connected to two vertical profiles (92) spaced apart from each other, to which a supporting profile (93) is mounted which supports the busbar (1) and which can be removed for raising the busbar (1) and can be replaced after the busbar (1) has been raised.

10. Installation device (5) according to one of the claims 1 - 9, **characterised in that** the mounting devices (9A; 9b) comprise adjustment devices (94) by means of which the height, position and orientation of the installed busbars (1) can be adjusted.

11. Installation device (5) according to one of the claims 1 - 10, **characterised in that** the deflection rollers (54A, 54B) are each detachably connected to the associated horizontal profile (91) or that the deflection rollers (54A, 54B) are each integrated into the associated horizontal profile (91).

12. Method for installing a busbar (1) with an installation device (5) according to one of the claims 1 - 11, **characterised in,**
- **that** a work stage (51) with a working platform (511) and optionally a railing (513) is provided;
- **that** two traction devices (52A, 52B), each of which is or are provided with a traction means (53A; 53B), are connected to the work stage (51) in the region of the working platform (511) by means of preferably releasable connecting means (523, 524);
- **that** at least two mounting devices (9A, 9b), which are used to install the busbar (1) and which each comprise a supporting profile (93) for this purpose, are mounted on the ceiling (8) of the building;
- **that** the mounting devices (9A, 9b) are each provided with a deflection pulley (54A; 54B) at the position at which the busbar (1) is to be pulled up;
- **that** the traction means (53A; 53B) are inserted into the pulleys (54A; 54B) and connected to the busbar (1) to be installed;
- in that the traction devices (52A, 52B) are actuated to raise the busbar (1); and
- in that the busbar (1) is fixed in the mounting devices (9A, 9b).

13. Installation method (5) according to claim 12, **characterised in that** the mounting devices (9A, 9b) each comprise a horizontal profile (91), two vertical profiles (92) connected thereto and a support profile (93) connectable to the vertical profiles (92), and **in that** the horizontal profiles (91) are mounted on the ceiling (8) of the building and are preferably provided in the middle with the deflection pulley (54A, 54B) or **in that** the horizontal profiles (91) already provided with the deflection pulleys (54A, 54B) are mounted on the ceiling (8) of the building.

14. Installation method (5) according to claim 12 or 13, **characterised in that** the traction devices (52A, 52B) are each provided with an electrically operated drive unit (521), each controlled by an individually provided control unit (50) or shared control unit (50) to pull up the busbar (1).

15. Installation method (5) according to claim 12, 13 or 14, **characterised in that** the supporting profiles (93) are removed before the busbar (1) is raised and are inserted into the mounting devices (9A, 9B) after the busbar (1) is raised and that the mounting devices (9A; 9b) comprise adjusting devices (94) by means of which the height, position and alignment of the busbar (1) resting on the supporting profiles are adjusted as required.

## Revendications

1. Dispositif d'installation (5) pour le montage d'au moins une barre omnibus (1) avec des dispositifs de montage (9A, 9B), qui peuvent être montés sur un plafond de bâtiment (8), avec deux dispositifs de levage (5A, 5B), qui comportent chacun un moyen de traction (53A, 53B) et chacun une poulie de renvoi (54A, 54B) reliée au dispositif de montage (9A ; 9B) correspondant, **caractérisé en ce qu'**il est prévu au moins une terrasse de travail (51) avec une plateforme de travail (511) et éventuellement une balustrade (513), sur laquelle est fixé, dans la zone de la plateforme de travail (511), par des moyens de liaison (523, 524), pour chacun des dispositifs de levage (5A, 5B), un dispositif de traction (52A ; 52B), au moyen duquel le moyen de traction (53A ; 53B) correspondant, qui est guidé par la poulie de renvoi (54A ; 54B) correspondante et qui peut être relié par une pièce d'extrémité (531A ; 531B) à l'au moins une barre omnibus (1), peut être tiré, afin de hisser l'au moins une barre omnibus (1) dans les dispositifs de montage (9A, 9B) dans lesquels elle peut être fixée.

2. Dispositif d'installation (5) selon la revendication 1, **caractérisé en ce que** les dispositifs de traction (52A ; 52B) comprennent chacun un dispositif d'entraînement (521) pour l'entraînement motorisé ou manuel.

3. Dispositif d'installation (5) selon la revendication 2, **caractérisé en ce que** les dispositifs d'entraînement (521) sont reliés par fil ou sans fil chacun à une unité de commande (50) ou peuvent être reliés à celle-ci, ou **en ce que** les dispositifs d'entraînement (521) sont reliés par fil ou sans fil à une unité de commande commune (50) au moyen de laquelle les dispositifs d'entraînement (521) peuvent être actionnés de manière synchrone.

4. Dispositif d'installation (5) selon la revendication 1, 2 ou 3, **caractérisé en ce que** les dispositifs de traction (52A ; 52B) maintiennent le moyen de traction (53A ; 53B) par un galet ou **en ce que** le moyen de traction (53A ; 53B) maintenu par les dispositifs de traction (52A ; 52B), entourant éventuellement un galet de traction une ou plusieurs fois, traverse les dispositifs de traction (52A ; 52B).

5. Dispositif d'installation (5) selon une des revendications 1 - 4, **caractérisé en ce que** les dispositifs de traction (52A ; 52B) sont reliés par des moyens de liaison amovibles, tels que des mousquetons (524), à la structure, éventuellement une balustrade (513), de la terrasse de travail (51).

6. Dispositif d'installation (5) selon une des revendications 1 - 5, **caractérisé en ce que** les moyens de traction (53A ; 53B) sont des cordes et les dispositifs de traction (52A ; 52B) sont des treuils.

7. Dispositif d'installation (5) selon une des revendications 1 - 6, **caractérisé en ce que** la terrasse de travail peut être déplacée sur des roues.

8. Dispositif d'installation (5) selon une des revendications 1 - 7, **caractérisé en ce que** les pièces d'extrémité (531A, 531B) des moyens de traction (53A ; 53B) orientées vers les barres omnibus (1) peuvent être reliées par un crochet (5312) à une boucle (531') de préférence en forme de bande qui sert à maintenir la barre omnibus (1), ou **en ce que** les pièces d'extrémité (531A, 531B) des moyens de traction (53A ; 53B) orientées vers les barres omnibus (1) peuvent être reliées à des éléments de montage (10) de la barre omnibus (1) .

9. Dispositif d'installation (5) selon une des revendications 1 - 8, **caractérisé en ce que** les dispositifs de montage (9A ; 9b) comprennent un profilé horizontal (91) pouvant être monté sur le plafond de bâtiment (8), qui est muni de deux profilés verticaux (92) espacés l'un de l'autre, sur lesquels est monté un profilé porteur (93) qui porte la barre omnibus (1) et qui peut être enlevé pour soulever la barre omnibus (1) et qui peut être remis en place après le soulèvement de la barre omnibus (1).

10. Dispositif d'installation (5) selon une des revendications 1 - 9, **caractérisé en ce que** les dispositifs de montage (9A ; 9b) présentent des dispositifs d'ajustement (94) au moyen desquels la hauteur, la position et l'orientation des barres omnibus installées (1) peuvent être ajustées.

11. Dispositif d'installation (5) selon une des revendications 1 - 10, **caractérisé en ce que** les poulies de renvoi (54A, 54B) sont reliées chacune de manière amovible au profilé horizontal (91) correspondant ou **en ce que** les poulies de renvoi (54A, 54B) sont intégrées chacune dans le profilé horizontal (91) correspondant.

12. Procédé d'installation d'une barre omnibus (1) avec un dispositif d'installation (5) selon une des revendications 1 - 11, **caractérisé en ce, que**
- il est prévu une terrasse de travail (51) avec une plateforme de travail (511) et éventuellement une balustrade (513);
- par des moyens de liaison (523, 524) de préférence amovibles, deux dispositifs de traction (52A, 52B), qui sont ou seront munis chacun d'un moyen de traction (53A ; 53B), sont reliés à la terrasse de travail (51) dans la zone de la plateforme de travail (511);
- au moins deux dispositifs de montage (9A, 9b), qui servent à l'installation de la barre omnibus (1) et qui présentent à cet effet chacun un profilé porteur (93), sont montés sur le plafond de bâtiment (8);
- les dispositifs de montage (9A, 9b) sont munis chacun d'une poulie de renvoi (54A ; 54B) à la position où la barre omnibus (1) doit être relevée;
- les moyens de traction (53A ; 53B) sont insérés dans les poulies (54A ; 54B) et reliés à la barre omnibus (1) à installer;
- les dispositifs de traction (52A, 52B) sont actionnés pour soulever la barre omnibus (1); et
- la barre omnibus (1) est fixée dans les dispositifs de montage (9A, 9b).

13. Procédé d'installation (5) selon la revendication 12, **caractérisé en ce que** les dispositifs de montage (9A, 9b) comprennent chacun un profilé horizontal (91), deux profilés verticaux (92) reliés à celui-ci ainsi qu'un profilé porteur (93) pouvant être relié aux profilés verticaux (92) et **en ce que** les profilés horizontaux (91) sont montés sur le plafond de bâtiment (8) et sont de préférence équipés au milieu par la poulie de renvoi (54A, 54B) ou que les profilés horizontaux (91) déjà munis des poulies de renvoi (54 A, 54 B) sont montés sur le plafond de bâtiment (8).

14. Procédé d'installation (5) selon la revendication 12 ou 13, **caractérisé en ce que** les dispositifs de traction (52A, 52B) sont chacun pourvus d'un dispositif d'entraînement (521) à commande électrique, qui sont chacun commandés par une unité de commande (50) prévue individuellement ou une unité de commande (50) utilisée en commun, pour soulever la barre omnibus (1).

15. Procédé d'installation (5) selon la revendication 12, 13 ou 14, **caractérisé en ce que** les profilés porteurs (93) sont enlevés avant le levage de la barre omnibus (1) et insérés dans les dispositifs de montage (9A, 9B) après le levage de la barre omnibus (1) et que les dispositifs de montage (9A ; 9b) présentent des dispositifs d'ajustement (94) au moyen desquels la hauteur, la position et l'orientation de la barre omnibus (1) reposant sur les profilés porteurs sont ajustées en cas de besoin.
